# EUROPEAN PATENT SPECIFICATION

(11) **EP 3 187 605 B1**
(45) Date of publication and mention of the grant of the patent: **20.05.2020**
(21) Application number: 15382669.8
(22) Date of filing: 28.12.2015
(51) Int. Cl.: C22C 49/00, C22C 9/00, C22C 9/01, B23K 1/20, C22C 1/02, F16C 17/00, F16C 33/12

(54) **A HYBRID ALUMINIUM BRONZE ALLOY AND ITS PREPARATION METHOD**
EINE HYBRIDER BRONZELEGIERUNG UND IHRE HERSTELLUNGSMETHODE
ALLIAGE DE BRONZE D'ALUMINIUM HYBRIDE ET SON PROCÉDÉ DE PRÉPARATION

(43) Date of publication of application: 05.07.2017
(73) Proprietor: Casa Maristas Azterlan, 48200 Durango, Vizcaya (ES); Veigalan Estudio 2010 S.L.U., 48200 Durango (Vizcaya) (ES)
(72) Inventor: SANTOS, Fernando, 48200 Durango (Vizcaya) (ES); BAQUEDANO, Asier, 48200 Durango (Vizcaya) (ES); FERNÁNDEZ-CALVO, Ana Isabel, 48200 Durango (Vizcaya) (ES); LIZARRALDE, Ibon, 48200 Durango (Vizcaya) (ES)
(74) Representative: Balder IP Law, S.L.

(56) References cited:
- CN-A- 104 630 547
- CN-A- 104 862 522
- CN-B- 102 899 522
- JP-A- S5 773 146
- US-A- 5 096 508

## Description

### FIELD OF THE INVENTION

The present invention is encompassed within the sector of metallurgical industry. Particularly, it relates to a new aluminium bronze alloy with a good balance between corrosion resistance, heat transfer and wear resistance useful in different applications such as marine propellers, bearings, gears, bushes pumps, heat exchangers components. The new aluminium bronze alloy comprises a hybrid structure of an aluminium bronze matrix with dispersed microprecipitates of a martensitic stainless steel. The new aluminium bronze alloy may be submitted to a thermochemical surface treatment process by which its hardness is improved rendering a thermochemically surface treated aluminium bronze alloy of the invention. The present invention also relates to a method for the manufacturing of the mentioned new aluminium bronze alloys.

### BACKGROUND OF THE INVENTION

Aluminium bronze alloys are widely used in applications where a balance between corrosion resistance, strength (comparable to medium carbon Steel), high heat transfer values and resistance to cavitation erosion are required. Nevertheless, although corrosion resistance is satisfactory for these applications, mechanical properties are limited in tensile strength, yield strength and wear resistance.

On the other hand it is well known that martensitic stainless steels present a worse corrosion resistance than aluminium bronze alloys but present better mechanical properties. Surface hardening techniques for steels, like nitriding, are also well known in the art. Nitriding allows the diffusion of nitrogen and carbon into the metal, which form chrome and iron nitrides and carbides respectively increasing surface hardness of steels. Affected thicknesses vary from 0.1 to 1mm and achieved hardness ranges from 50 to 62 HRc. Aluminium bronze alloys however cannot be submitted to a nitriding process as copper does not neither combine with carbon nor nitrogen, nor allows the diffusion of these elements into the alloy. The attempt followed in Document US5096508A describes a nitriding process by adding different elements to the copper alloy with really limited layer of modification with only 400 angstroms, and without reporting hardness data.

In view of these shortcomings of aluminium bronze alloys, there is the need in the state of the art to provide new alternative aluminium bronze alloys that maintain the good corrosion resistance and heat transfer (for heat interchange solutions) properties of aluminium bronze alloys, but with improved wear resistance properties to withstand, for example, cavitation conditions in marine water.

Document CN 102 899 522 B discloses a nickel-aluminium-bronze alloy containing 70-82% of Cu, 0.5-4.0% of Mn, 7.0 - 11.0% of Al, 2.0 - 6.0% of Fe, 3-6% of Ni and Zn<1.0, to which Zr is added in a mass percentage of 0.03 to 0.1% and its production method.

Document JPS5773146 A discloses a wear resistant aluminium bronze alloy in which graphite is used

### DESCRIPTION OF THE DRAWINGS

**Figure 1:** Figure 1a: SEM image of an aluminium bronze alloy of the invention (according to Example 1B) and Figure 1b: an enlargement of an area of the SEM image of Figure 1a. A microprecipitate of a size about 100 microns and the presence of needles with martensitic nature inside can be observed.
**Figure 2****:** Energy Dispersive Spectrometer (EDS) composition analysis of the microprecipitates shown in Figure 1.
**Figure 3****:** Energy Dispersive Spectrometer (EDS) composition analysis of the aluminium bronze alloy matrix
**Figure 4****:** Mechanical test results obtained with two samples (1A and 1B) according to the invention and a sample according to the state of the art (CC333G) for comparative purposes. Y (MPa) is yield strength, UTS (MPa) is the ultimate tensile strength and E (%) is the elongation percentage.
**Figure 5****:** Images showing the result of submitting to a salt spray test two samples (1A and 1B) according to the invention and a sample according to the state of the art (CC333G) for comparative purposes.

### DESCRIPTION OF THE INVENTION

In a first aspect the present invention relates to the hybrid aluminium bronze alloy of claim 1.

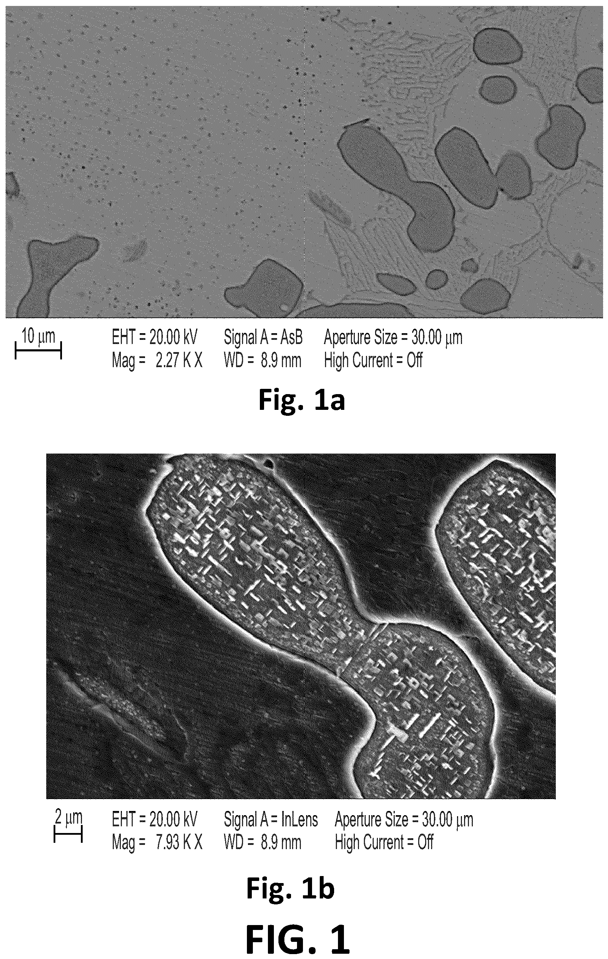

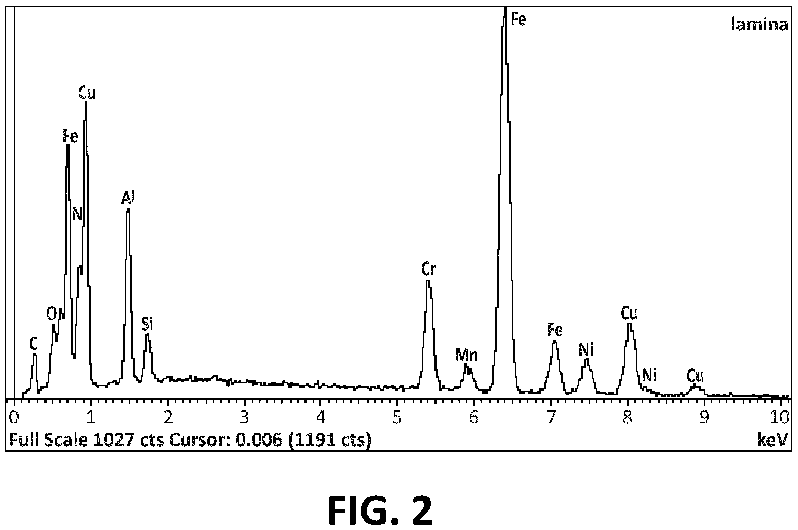

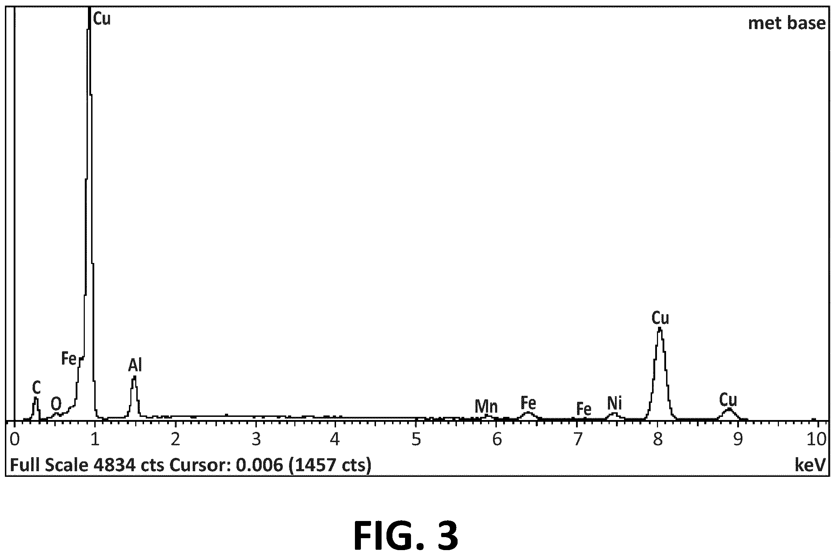

This new hybrid aluminium bronze alloy, hereinafter referred to as the first hybrid alloy of the invention comprises dispersed microprecipitates of martensitic stainless steel in an aluminium bronze matrix as they are shown in Figure 1. These microprecipitates are harder than the aluminium bronze matrix, and advantageously increase the wear resistance of the aluminium bronze alloy used as starting material for its manufacturing, without substantially affecting its corrosion resistance.
Martensite stainless steel is known to have an appearance of needles caused when the austenite undergoes a phase transformation without diffusion. Martensite stainless steel is a hard phase. It occurs regularly in steels when quenching heat treatments take place. When martensite appears it gives the steel the highest hardness. Therefore, these martensitic needles provide this first hybrid aluminium bronze alloy of the invention with improved wear resistance.
EDS composition analysis of a first hybrid alloy of the invention, has shown that the microprecipitates of martensitic stainless steel region are rich in chrome, meaning that they contain more chrome than the aluminium bronze matrix. This can be seen in Figures 2 and 3.
The microprecipitates of the martensitic stainless steel region have a composition mainly consisting of Fe, Cr, Ni and C (Figure 2). The microprecipates are inside grains as it can be seen in Figure 1b). The microprecipitates also show a typical needle shape as those found in martensitic stainless steel, and have an average length of between 2 and 200 µm as determined by SEM.
In the following Table 1 the mechanical properties of the first hybrid alloy of the invention are shown and compared with those of CC333G (EN 1982:2008), a standard commercial alloy.
The first hybrid alloy of the invention shows advantageously higher Brinell hardness compared to alloy CC333G, which presents the maximum achievable properties for these type of aluminium bronze alloys in terms of Brinell hardness and 0.2% yield strength:

**Table 1: Mechanical Properties**

| | Tensile Strength (N/mm²) | 0.2% Yield strength (N/mm²) | Elongation, (%) | Brinell Hardness HB |
|---|---|---|---|---|
| CC333G | 600 | 250 | 13 | 140 |
| First hybrid alloy of the invention | 528-535 | 245-294 | 14.1 - 5.9 | 141-163 |

The first hybrid alloy of the invention presents improved wear resistance as it can be concluded in view of its improved hardness and the presence of martensitic steel microprecipitates.

According to a particular embodiment the Cr amount is comprised between 1.5 and 2.8 wt. %, like 1.6, 1.8, 2.2, or 2.4, where the alloys are more thermochemically surface treatable than CC333G, show increased hardness and better wear resistance than CC333G, and show very good corrosion resistance. According to a particular embodiment the Cr amount is from 0.5 to lower than 1.5 wt. %, like 0.7, 0.9, 1.1 or 1.3 where the inventors have observed that alloys are also hardenable by thermochemical surface processes while CC333G is not, show increased hardness and better wear resistance than CC333G, and show very good corrosion resistance, however to a lesser extent.

According to another particular embodiment the C amount is comprised between 0.01 and 0.04 wt. %, like 0.02 and 0.03 where the inventors have observed that the alloys also show increased hardness compared to CC333G. According to another particular embodiment the C amount is comprised between higher than 0.04 and 0.20 wt. %, like 0.05, 0.07, 0.10, 0.15 or 0.18 wt. %, where the alloys show increased hardness compared to CC333G but to a lesser extent.

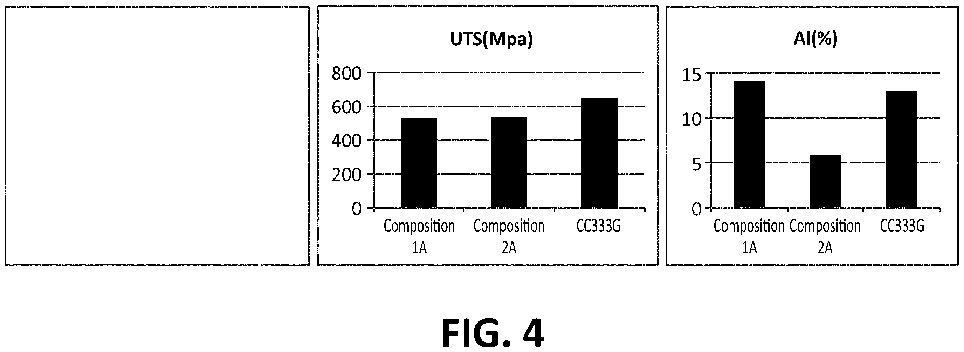

According to another particular embodiment, the Fe amount in the composition of the first hybrid alloy is comprised between 5.0 and lower 10% where the corrosion resistance is very similar to that of the CC333G alloy. According to another particular embodiment, the Fe amount in the composition of the first hybrid alloy is 10% to 14%, like 11%, 12% or 13%, where the corrosion resistance is then slightly lower than that of the CC333G alloy (example 3, Figure 4), however hardness is higher than CC333G and it is also hardenable by thermochemical surface treatment processes while CC333G is not (example 4).

According to another particular embodiment the Ni amount is comprised between 4 and 7%, such as 5%, or 6%, where the alloy shows a very good corrosion resistance, like CC333G. According to a particular embodiment the Ni amount from 2 to lower than 4%, such as 2.5, 3, or 3.5%, where the corrosion resistance is very good, similar to CC333G, but slightly lower.

Further the inventors have also surprisingly found that the surface of the first hybrid alloy of the invention can be thermochemically treated, whereas conventional aluminium bronze alloys such as CC330G, CC331G y CC333G are not treatable. Accordingly the first hybrid alloy of the invention can be submitted to a thermochemical surface treatment process rendering a further modified alloy, which shows improved mechanical properties, such as hardness. Iron and chrome present in the first alloy promote the nitrogen diffusion into the alloy. This hardened thermochemically surface treated alloy, which is another aspect of the invention, will be referred to in the following also as the second hybrid alloy of the invention and is obtainable by submitting the first hybrid alloy of the invention to a thermochemical surface treatment process as further below explained.

Thus, whereas the starting materials CC330G, CC331G y CC333G used for the manufacturing of the first alloy of the invention cannot be thermochemically surface treated and their hardness is about 100HB to 140 HB, the first alloy of the invention shows higher hardness values between 141 and 163 HB, and the second hybrid alloy of the invention reaches even higher hardness values of about 205-238 HB.

In an additional aspect the invention relates to the process of preparation described in claim 10.

The aluminium bronze alloy used as starting material and introduced in step (i) in the furnace can be commercially available aluminium bronze ingots, as CC330G, CC331G or CC333G quality, or mixtures thereof, which composition specifications are shown in the following Table 2, and wherein nomenclature is adjusted to norm EN 1982:2008.

**Table 2: Composition in weight percent (wt. %) according to norm EN 1982:2008.**

| (wt. %) | Cu | Al | Fe | Mn | Si | Ni | Pb | Zn | Sn |
|---|---|---|---|---|---|---|---|---|---|
| CC330G | 88.0-92.0 | 8.0-10.5 | <1.2 | <0.50 | <0.2 | <1 | <0.3 | <0.5 | <0.3 |
| CC331G | 83.0-89.5 | 8.7-10.5 | 1.5-3.5 | <1.0 | <0.2 | <1.5 | <0.1 | <0.5 | <0.2 |
| CC333G | 76.0-83.0 | 8.5-10.5 | 4-5.5 | <3 | <0.1 | 4-6 | <0.03 | <0.5 | <0.1 |

The furnace according to a particular embodiment is a conventional furnace like an induction melting furnace. The alloying elements Fe, Cr, Ni and C are added to the furnace in step (ii), by means, for example, of the following scrap and/or ferroalloys:
∘ Stainless steel scrap
∘ Pure Graphite (99-100% C)
∘ Ferrochrome with 60-75% of Chrome content
∘ Pure chrome (99-100% Cr),
∘ Pure nickel (99-100% Ni)
in order to obtain the desired composition of the first hybrid alloy of the invention. The adjustment of the additions and the desired composition can be readily carried out by a skilled person in the art. Also the skilled person is aware of other possible raw materials than can be used to add this allowing elements.

Stainless steel scrap which is useful for carrying out the present invention can present different chemical compositions; the furnace load will be balanced to achieve the final composition of the first hybrid alloy of the invention.

During the process of the invention it is necessary to protect the surface of the melt in the furnace with a protective flux to prevent oxidation losses of alloying elements (such as aluminium) and gas pick-up from the atmosphere. With the first charge of aluminium bronze alloy in the furnace, a surface protective flux is introduced to create a nonreactive surface layer that will avoid gases diffusing into the metal when it is already molten. Further, during the process the metal can be covered with a ceramic fibre blanket in order to prevent that hydrogen from the atmosphere dissolves in the molten metal and that also metal oxidations may take place.
Once the metal is molten reaction products (slag) are removed from the top of the surface in the furnace. To ease slag removal, a slag coagulation flux can be added. The furnace has to be switched off to stop turbulence and allow slag floating in induction furnaces.
During the melting process oxygen and hydrogen dissolve in the melt due to generated turbulence, being able to cause porosity and inclusions. If gases are not removed they get accumulated and holes appear in the last solidification step. Removal of oxygen is made by oxide removing agents like Lithium, introduced in a fixed proportion (e.g., one deoxidant tube each 25 kg of molten metal) in the furnace once all the charged elements have been loaded and are molten. Hydrogen is removed by nitrogen or argon bubbling from the bottom of the furnace by means of a porous plug.
Thereafter, a further step for removing slag from the top of the surface in the furnace is carried out by switching it off and leaving the slag floating. Then it is convenient to add slag coagulation flux until slag is thick enough and is removed with the metal stick. Before pouring the melt into the mould the metal must remain molten for a period of time to allow a correct homogenization of the charge elements. Typically time is not less than 10 minutes.
The melting and pouring temperature are variable depending for example on the thickness of the part to be cast. Usually temperature is in the range of 1250ºC-1300ºC, for example 1300°C for parts of less than 38 mm thick, and for parts of more than 38 mm thick, 1250°C.
As already mentioned the first hybrid alloy of the invention can be submitted to a thermochemical surface treatment process for rendering the second hybrid alloy of the invention which presents a strengthened surface.
Accordingly the invention further relates to a process for the manufacturing of a thermochemically surface treated alloy, herein referred to as the second hybrid alloy of the invention, which comprises submitting the first hybrid alloy of the invention to a thermochemical surface treatment process.
This thermochemical surface treatment process can be carried out in any conventional manner known to the skilled person in the art. In a particular embodiment, the thermochemical surface treatment comprises a nitriding step. Said step can be carried out in an ammonia atmosphere. By way of example only, nitriding can be typically carried out in an ammonia atmosphere at temperatures typically between 480-560°C. Time varies also depending on factors like the size of the part, and can be for example typically from 4 to 60 hours.
In the process, the ammonia is decomposed in the surface of the metal. The released nitrogen goes into the matrix and combines with Fe, Cr and Al, producing a surface harder layer comprising the formed nitrides with these metals. The depth of the resulting harder layer will depend on factors such as the temperature and the time of exposure to the ammonia atmosphere. Achieved layer depths typically vary from 125 µm to 700 µm. In a particular embodiment the layer depth is equal or greater than 200 µm, preferably 400 µm, more preferably 500 µm and even more preferably 600 µm.. Besides of the presence of this surface layer, with its termochemically modified composition, the second hybrid alloy presents the same chemical composition and structure as the first hybrid above disclosed.

Another aspect the invention relates to the use of the first and the second hybrid alloys of the invention for the manufacturing of parts generally prepared from aluminium bronze alloys, such as marine propellers, bearings, gears, bushes pumps and heat exchangers components for example.
The following examples are non-limiting and are merely representative of the invention.

### EXAMPLES

For the tests carried out in relation to the present invention keel blocks Y2 were prepared using chemically bonded sand moulds, following the standard norm UNE-EN 1563:1998. Keel blocks Y2 were then extracted from the moulds and cleaned by shot blasting.
Keel blocks were then cut and test samples for micrographic inspection of rectangular dimensions of approximately 30 x 30 x 10 mm were prepared by surface polishing and their microstructures were then analysed with a field emission gun scanning electron microscope (SEM) (Model ULTRA PLUS, Zeiss) Further, tensile test specimens were obtained from the keel blocks Y2. They were tested at room temperature in accordance to the method established in the norm UNE-EN-ISO 6892-1:2010 using test bars of 10 mm diameter and thread M16. Tensile tests were carried out using an Instron Universal testing machine to obtain yield strength (Y, MPa), ultimate tensile strength (UTS, MPa) and elongation percentage (E %). Brinell hardness was determined using an INSTROM WOLPER equipment model TESTOR 971/3000.
EDS Energy Dispersive Spectrometer (Spectrolab M10 from the company SPECTRO) was used for quantitative chemical analysis of the alloys.
Aluminium bronze ingots used in the manufacturing of the alloy of the invention of the example were ingots supplied degassed and with a certified chemical composition referring to a standard material CC331 G shown in the following Table 3:

**Table 3: Chemical composition of the aluminum bronze ingot (wt. %)**

| CC331G | Cu | Al | Fe | Mn | Ni |
|---|---|---|---|---|---|
| Composition | 89.0 | 9.2 | 2.1 | <0.50 | <1.5 |

### Example 1: Process for preparation of the hybrid alloys of the invention and castings.

### Example 1A

A CC331 G ingot (34 kg) was introduced in an induction furnace of 150 kg of capacity. To ease the dissolution and adjustment of different alloys, certified scrap (Table 4) of stainless steel CA40 (6 kgs) with the following chemical composition was added together.

**Table 4: Chemical composition of stainless steel scrap (wt. %)**

| Stainless steel CA40 | C | Si | Mn | P | S | Cr | Mo | Ni | Cu | Ti |
|---|---|---|---|---|---|---|---|---|---|---|
| Composition | 0.33 | 0.27 | 0.19 | 0.02 | <0.005 | 13.6 | 0.16 | 0.66 | 1.2 | <0.005 |

Protective flux (ALBRAL 05, Foseco) was added in a proportion of 150 grams for each 40 kg of metal for surface protection (avoiding gas diffusion in the molten metal).
Melting was done until a temperature of 1300ºC was achieved. Then oxygen removal was performed using two Lithium E1 tubes, (Foseco) (one tube for each 25 kg). Nitrogen purging was performed by the bottom of the furnace to eliminate hydrogen with a porous plug.

Once the metal was molten and the slag was removed from the top of the furnace, 10 minutes were waited for adequate mixing up of the elements.
Pouring was performed into two keel blocks Y2 in order to obtain test specimens for later on testing.
The final composition can be seen in table 5

**Table 5. Chemical composition of sample 1A (wt. %).**

| | Al | Fe | Cr | C | Ni | Mn |
|---|---|---|---|---|---|---|
| Composition 1A | 7.51% | 9.81% | 1.13% | 0.02% | 4.68% | 0.93% |

| | | | | | | |
|---|---|---|---|---|---|---|
| Cu in balance | | | | | | |

### Example 1B

Another alloy of the invention has prepared with higher Fe, Cr, C and Ni. Two keel blocks Y2 were poured. Test Samples of 30 x 30 x 20 mm were mechanically prepared and their microstructure were analysed. Evaluation of type and distribution of different phases was done. SEM images of a sample is shown in Figure 1.

EDS (Energy Dispersive Spectrometer) for the chemical analysis of the elements present in the microprecipitates resulted in the composition shown in Figure 2.
In Figure 1A the microprecipitates are shown in dark grey colour. These are martensitic precipitates rich Fe, Cr and C elements which have been seen to concentrate in them. Cr for example is not detected in the matrix. It can be observed that they are embedded in the matrix (light grey colour). In Figure 1B (enlargement of a small area of Figure 1A) it can be observed that the precipitates are martensitic type (seen in Figure 2) and their needle shape typical in this type of microstructure. These are similar to those found in martensitic stainless steel. As already mentioned the microprecipitates have an average length of 2- 200 µm and their disposition is inside grains.
The chemical composition of the final sample can be seen in table 6.

**Table 6 Chemical composition of sample 1B (wt. %)**

| | Al | Fe | Cr | C | Ni | Mn |
|---|---|---|---|---|---|---|
| Composition 1B | 7.01% | 13.70% | 1.68% | 0.05% | 6.68% | 0.88% |

| | | | | | | |
|---|---|---|---|---|---|---|
| Cu in balance | | | | | | |

### Example 2: Mechanical properties.

The compositions 1A and 1B are compared with CCC333G in Table 7, according to norm (CC333G EN 1982:2008).

**Table 7: Composition comparison of aluminium bronze alloys (wt. %)**

| | Al | Fe | Cr | C | Ni | Mn |
|---|---|---|---|---|---|---|
| CC333G | 9.23% | 4.52% | --- | --- | 4.51% | 1.33% |
| Composition 1A | 7.51% | 9.81% | 1.13% | 0.02% | 4.68% | 0.93% |
| Composition 1B | 7.01% | 13.70% | 1.68% | 0.05% | 6.68% | 0.88% |

| | | | | | | |
|---|---|---|---|---|---|---|
| Cu in balance | | | | | | |

The result of the mechanical properties of the three compositions comparison (composition 1A, 1B and CC333G) can be seen in Figure 4 were yield strength (Y), tensile strength (UTS) and elongation (E %) are represented.
The results show that mechanical properties like Y and UTS for the alloy of the invention are not impaired compared to the conventional CC333G.
It has also be seen that for first hybrid alloys of the invention with a lower amount of iron (9.8%) and a lower amount of nickel (4.6 wt. %) (Composition 1A) the elongation is also comparable to CC333G. However, for first hybrid alloys of the invention with a higher amount of iron (13.7 wt. %) and higher amount of nickel (6.7 wt. %)
(Composition 1B), the elongation is reduced by more than 50% compared to CC333G and Composition 1A.

**Table 8 Comparison of mechanical properties**

| Mechanical Properties | Tensile Strength (N/mm²) | 0.2% Proof Strength (N/mm2) | Elongation (%) | Brinell Hardness HBW |
|---|---|---|---|---|
| CC333G | 600 | 250 | 13.0 | 140 |
| Composition 1A | 528 | 245 | 14.1 | 141 |
| Composition 1B | 535 | 294 | 5.9 | 163 |

### Example 3: Corrosion resistance

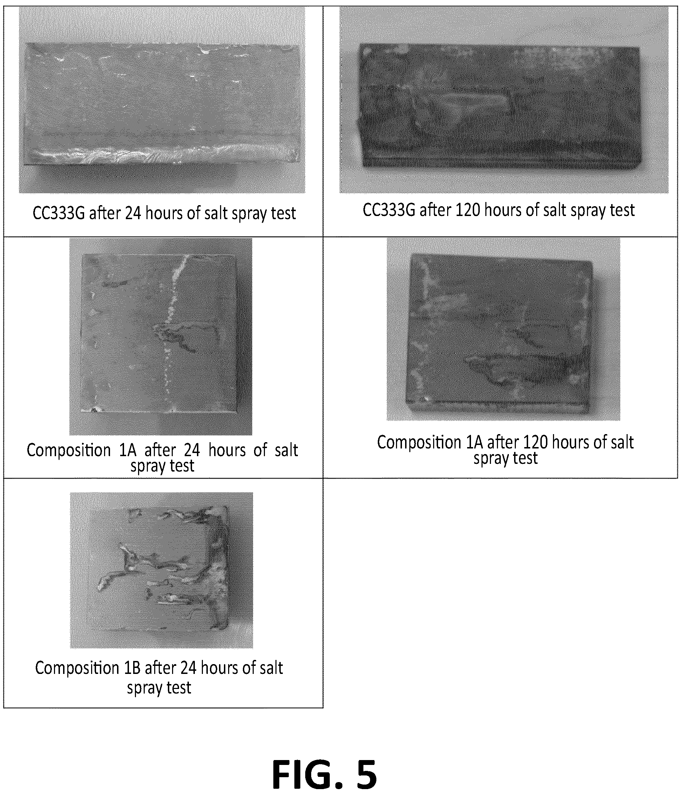

In this example the corrosion behaviour Composition 1A and Composition 1B has been tested using a salt spray chamber and following the standard UNE EN-ISO 9227:2007. Results are shown in Figure 5.
A sample of commercial material, CC333G, was also submitted to the test for comparison.
The results show that the corrosion resistance of the hybrid alloy of the invention is optimal and comparable to that of the CC333G alloy for lower Fe contents (see result in Figure 5, corresponding to Composition 1A). The corrosion resistance however decreases for the alloy of the invention when the Fe content increases (Composition 1B).

### Example 4: Hardness and thermochemical surface treatment process

Compositions 1A and 1B were thermochemically surface treated by a gas nitriding process and hardness tests were performed before and thereafter on the resulting thermochemically surface treated samples (second alloys of the invention). CC333G was used for comparison.
As expected commercial CC333G material was not thermochemically surface treatable and the surface hardness remained the same, after being thermochemically surface treated.
Composition 1A and composition 1B were thermochemically surface treatable, and their hardness increased significantly after the thermochemical surface treatment process. As shown in Table 6 below, compositions 1A and 1B before the thermochemical surface treatment presented higher hardness than CC333G. After being thermochemically surface treated. Compositions 1A and 1B achieved a hardness of 205 and 238 HB respectively.
An increase in hardness can be observed for alloys with higher iron (13.70 wt. %) and chrome (1.68 wt. %) contents (Composition 1A compared to Composition 1B).

**Table 9.-Hardness comparison (HB) in as cast condition and after themochemical surface treatment**

| | HB | |
|---|---|---|
| | As Cast | Thermochemically surface treated |
| CC333G | 140 | 140 (Not effective) |
| Composition 1A | 141 | 205 |
| Composition 1B | 163 | 238 |

## Claims

1. A hybrid aluminium bronze alloy comprising dispersed microprecipitates of martensitic stainless steel in an aluminium bronze matrix, and consisting of the following chemical composition; the percentages are expressed by weight with respect to the total weight of the alloy.
| | |
|---|---|
| Al: | 6 - 9% |
| Fe: | 5.0 - 14% |
| Ni: | 2.0 - 7% |
| Cr: | 0.5 - 2.8% |
| C: | 0.01 - 0.20% |
| Mn: | <3% |
| Zn | < 0.5% |
| Si | <0.2% |
| Sn | <0.3% |
| Pb | <0.3% |
Cu in balance and
further impurities in an total amount of less than 0.5%.

2. A hybrid aluminium bronze alloy according to claim 1, wherein the Cr amount is comprised between 1.5 and 2.8%.

3. A hybrid aluminium bronze alloy according to any of claim 1, wherein the Cr amount is from 0.5 to lower than 1.5%.

4. A hybrid aluminium bronze alloy according to any of claims 1 to 3, wherein the C amount is from 0.01 to 0.04 wt. % .

5. A hybrid aluminium bronze alloy according to any of claims 1 to 3, wherein the C amount is comprised between higher than 0.04 and 0.20 wt. %.

6. A hybrid aluminium bronze alloy according to any of claims 1 to 5, wherein the Fe amount is comprised between 5 and lower 10%.

7. A hybrid aluminium bronze alloy according to any of claims 1 to 5, wherein the Fe amount is comprised between 10% and 14%.

8. A hybrid aluminium bronze alloy according to claim 1 to 7, wherein the Ni amount is comprised between 4 and 7%.

9. A hybrid aluminium bronze alloy according to claim 1 to 7, wherein the Ni amount is comprised between 2 and lower than 4%.

10. A process for the preparation of the alloy under protective flux according to any of the previous claims, comprising the following steps:
(i) Introducing in a furnace an aluminum bronze alloy with a composition selected from the group consisting of CC330G, CC331G, CC333G and their mixtures;
(ii) Adding thereto the following alloying elements: Fe, Cr, Ni and C to obtain the chemical composition of the first hybrid alloy as above disclosed,
(iii) Removing slag aided by flux addition, if necessary
(iv) Oxygen removal and hydrogen removal,
(v) Removing slag aided by flux addition, if necessary
(vi) Maintaining molten for homogenization
(vii) Pouring in a mould.

11. A process according to claim 10, wherein the alloying elements Fe, Cr, Ni and C are added to in step (ii), by means of the following scrap and/or ferroalloys:
∘ Stainless steel scrap
∘ Pure Graphite: 99 - 100% C
∘ Ferrochrome with 60-75% of Chrome content
∘ Pure chrome: 99 - 100% Cr
∘ Pure nickel: 99-100% Ni

12. A process comprising submitting the alloy according to any of claims 1 to 9, to a thermochemical surface treatment process.

13. A process according to claim 12, where the thermochemical surface treatment process comprises a nitriding step.

14. A thermochemically surface treated alloy obtained by the process according to claim 12 or 13 with a strengthened surface.

15. Use of the alloy according to any of claims 1 to 9 or claim 14 for the manufacturing of marine propellers, bearings, gears, bushes pumps and heat exchangers components.

## Patentansprüche

1. Eine hybride Aluminiumbronze-Legierung aufweisend dispergierte Mikroausfällungen von martensitischem Edelstahl in einer Aluminiumbronze-Matrix, und zusammengesetzt aus folgenden chemischen Verbindungen; wobei die Prozentanteile als Gewicht in Bezug auf das Gesamtgewicht der Legierung angegeben sind.
| | |
|---|---|
| Al: | 6 - 9% |
| Fe: | 5.0 - 14% |
| Ni: | 2.0 - 7% |
| Cr: | 0.5 - 2.8% |
| C: | 0.01 - 0.20% |
| Mn: | <3% |
| Zn: | <0.5% |
| Si: | <0.2% |
| Sn: | <0.3% |
| Pb: | <0.3% |
Kupfer im Gleichgewicht und weitere Verunreinigungen im Gesamtumfang von weniger als 0.5%.

2. Eine hybride Aluminiumbronze-Legierung nach Anspruch 1, wobei der Cr-Anteil zwischen 1.5 und 2.8% liegt.

3. Eine hybride Aluminiumbronze-Legierung nach Anspruch 1, wobei der Cr-Anteil 0.5 bis weniger als 1.5% beträgt.

4. Eine hybride Aluminiumbronze-Legierung nach einem der Ansprüche 1 bis 3, wobei der C-Anteil 0.01 bis 0.04 wt.% beträgt.

5. Eine hybride Aluminiumbronze-Legierung nach einem der Ansprüche 1 bis 3, wobei der C-Anteil zwischen größer als 0.04 und 0.20 wt.% liegt.

6. Eine hybride Aluminiumbronze-Legierung nach einem der Ansprüche 1 bis 5, wobei der Fe-Anteil zwischen 5 und weniger als 10% liegt.

7. Eine hybride Aluminiumbronze-Legierung nach einem der Ansprüche 1 bis 5, wobei der Fe-Anteil zwischen 10% und 14% liegt.

8. Eine hybride Aluminiumbronze-Legierung nach einem der Ansprüche 1 bis 7, wobei der Ni-Anteil zwischen 4 und 7% liegt.

9. Eine hybride Aluminiumbronze-Legierung nach einem der Ansprüche 1 bis 7, wobei der Ni-Anteil zwischen 2 und weniger als 4% liegt.

10. Prozess zur Präparation der Legierung unter Schutz-Flussmittel nach einem der vorhergehenden Ansprüche, aufweisend folgende Schritte:
(i) Einführen einer Aluminiumbronze-Legierung mit einer Verbindung ausgewählt aus der Gruppe bestehend aus CC330G, CC331G, CC333G und deren Mischungen, in einen Schmelzofen;
(ii) Hinzugeben folgender Legierungselemente: Fe, Cr, Ni und C, um die chemische Verbindung der vorstehend offenbarten ersten hybriden Legierung zu erhalten;
(iii) Entfernen von bei Flussmittel-Zugabe erhaltener Schlacke, falls notwendig;
(iv) Sauerstoff-Entzug und Wasserstoff-Entzug;
(v) Entfernen von bei Flussmittel-Zugabe erhaltener Schlacke, falls notwendig;
(vi) Aufrechterhalten des Schmelzens zur Homogenisierung
(vii) Einfüllen in eine Form.

11. Prozess nach Anspruch 10, wobei die Legierungselemente Fe, Cr, Ni und C in Schritt (ii) mittels folgender Altmetall und/oder Ferrolegierungen hinzugefügt werden:
- Edelstahl-Schrott
- reines Graphit: 99 - 100% C
- Ferrochrom mit 60 -75% Chromgehalt
- Reines Chrom: 99 - 100% Cr
- Reines Nickel: 99 - 100% Ni

12. Prozess umfassend Aussetzen der Legierung nach einem der Ansprüche 1 bis 9 einem thermochemischen Oberflächenbehandlungsprozess.

13. Prozess nach Anspruch 12, wobei der thermochemische Oberflächenbehandlungsprozess einen Nitrierungs-Schritt umfasst.

14. Thermochemisch oberflächenbehandelte Legierung erhalten nach einem Prozess nach Anspruch 12 oder 13 mit einer verstärkten Oberfläche.

15. Verwendung der Legierung nach einem der Ansprüche 1 bis 9 oder Anspruch 14 zur Herstellung von Schiffsschrauben, Lagern, Getrieben, Buchsen, Pumpen und Wärmetauscher-Komponenten.

## Revendications

1. Alliage de bronze et d'aluminium hybride comprenant des microprécipités d'acier inoxydable martensitique dispersés dans une matrice de bronze et d'aluminium, et constitué de la composition chimique suivante; les pourcentages sont exprimés en poids par rapport au poids total de l'alliage.
Al : 6 - 9 %
Fe : 5,0 - 14 %
Ni : 2,0- 7%
Cr : 0,5 - 2,8 %
C : 0,01-0,20%
Mn:<3%
Zn < 0,5 %
Si < 0,2%
Sn < 0,3 %
Pb < 0,3 %
Cu étant le reste et
des impuretés supplémentaires en une quantité totale inférieure à 0,5 %.

2. Alliage de bronze et d'aluminium hybride selon la revendication 1, dans lequel la quantité de Cr est comprise entre 1,5 et 2,8 %.

3. Alliage de bronze et d'aluminium hybride selon la revendication 1, dans lequel la quantité de Cr est de 0,5 à moins de 1,5 %.

4. Alliage de bronze et d'aluminium hybride selon l'une quelconque des revendications 1 à 3, dans lequel la quantité de C est de 0,01 à 0,04 % en poids.

5. Alliage de bronze et d'aluminium hybride selon l'une quelconque des revendications 1 à 3, dans lequel la quantité de C est comprise entre plus de 0,04 et 0,20 % en poids.

6. Alliage de bronze et d'aluminium hybride selon l'une quelconque des revendications 1 à 5, dans lequel la quantité de Fe est comprise entre 5 et moins de 10 %.

7. Alliage de bronze et d'aluminium hybride selon l'une quelconque des revendications 1 à 5, dans lequel la quantité de Fe est comprise entre 10% et 14%.

8. Alliage de bronze et d'aluminium hybride selon l'une quelconque des revendications 1 à 7, dans lequel la quantité de Ni est comprise entre 4 et 7 %.

9. Alliage de bronze et d'aluminium hybride selon l'une quelconque des revendications 1 à 7, dans lequel la quantité de Ni est comprise entre 2 et moins de 4 %.

10. Procédé de préparation de l'alliage sous flux protecteur selon l'une quelconque des revendications précédentes, comprenant les étapes suivantes :
(i) Introduction dans un four d'un alliage de bronze et d'aluminium ayant une composition choisie dans le groupe constitué par CC330G, CC331G, CC333G et leurs mélanges ;
(ii) Ajout à celui-ci des éléments d'alliage suivants : Fe, Cr, Ni et C pour obtenir la composition chimique du premier alliage hybride tel que divulgué ci-dessus,
(iii) Élimination des scories aidée par addition de flux, si nécessaire
(iv) Élimination de l'oxygène et élimination de l'hydrogène,
(v) Élimination des scories aidée par addition de flux, si nécessaire
(vi) Maintien de l'état fondu pour homogénéisation
(vii) Coulée dans un moule.

11. Procédé selon la revendication 10, dans lequel les éléments d'alliage Fe, Cr, Ni et C sont ajoutés, dans l'étape (ii), au moyen des déchets et/ou ferroalliages suivants :
∘ Déchets d'acier inoxydable
∘ Graphite pur : 99 à 100 % de C
∘ Ferrochrome ayant une teneur en chrome de 60 à 75 %
∘ Chrome pur : 99 à 100 % de Cr
∘ Nickel pur : 99 à 100 % de Ni.

12. Procédé comprenant la soumission de l'alliage selon l'une quelconque des revendications 1 à 9, à un procédé de traitement de surface thermochimique.

13. Procédé selon la revendication 12, dans lequel le procédé de traitement de surface thermochimique comprend une étape de nitruration.

14. Alliage traité en surface thermochimiquement obtenu par le procédé selon la revendication 12 ou 13 ayant une surface renforcée.

15. Utilisation de l'alliage selon l'une quelconque des revendications 1 à 9 ou selon la revendication 14 pour la fabrication de composants d'hélices marines, de paliers, d'engrenages, de pompes à bagues et d'échangeurs de chaleur.
